Europäisches Patentamt

European Patent Office

Office européen des brevets

(11) Publication number: **0 380 493 B1**

(12) **EUROPEAN PATENT SPECIFICATION**

(45) Date of publication of patent specification: **07.01.93**  (51) Int. Cl.⁵: **C04B 38/10**

(21) Application number: **88906208.9**

(22) Date of filing: **05.07.88**

(86) International application number:
**PCT/SE88/00369**

(87) International publication number:
**WO 89/00153 (12.01.89 89/02)**

(54) **METHOD FOR PRODUCING OF CONCRETE WITH VARIABLE DENSITY.**

(30) Priority: **08.07.87 SE 8702806**

(43) Date of publication of application:
**08.08.90 Bulletin 90/32**

(45) Publication of the grant of the patent:
**07.01.93 Bulletin 93/01**

(84) Designated Contracting States:
**AT BE CH DE FR GB IT LI LU NL SE**

(56) References cited:
**DE-A-25 134 30**

(73) Proprietor: **DANES VERKSTÄDER AB**
**Ängsvägen 5**
**S-84100 Ange(SE)**

(72) Inventor: **JOHANSSON, Ingemar**
**Färjevägen 1**
**S-841 00 Ange(SE)**
Inventor: **SVEDMAN, Kjell**
**Ovansjö 288 B**
**S-841 00 Ange(SE)**

(74) Representative: **Onn, Thorsten et al**
**AB Stockholms Patentbyra Zacco & Bruhn**
**P.O. Box 23101**
**S-104 35 Stockholm(SE)**

## Description

The present invention concerns a method for producing concrete with variable density, particularly within the range of 800-2000 kg/m³, where also the compression strength can be kept high, e.g. more than 12 MPa at a density of 1600 kg/m³.

It has proved to be that production of concrete mass preferably is made at stationary concrete stations and that the concrete mass is moulded in situ in moulds to transportable units or is transported to the building place in a liquid shape to be moulded and hardened in moulds. The advantages are several. Among others can be mentioned:

1. A stationary equipment can be made more technically complete.

2. The capacity can be made bigger for a stationary plant.

3. The access to laboratory equipment for testing of used materials and the finished product makes the concrete to be produced with a higher accuracy.

4. The working place does not need to be saddled with concrete mixer, stores of cement and ballast and so on.

Therefore most industrial countries on the whole have complete concrete stations for delivery of concrete mass to the working places.

The concrete with the greatest range of application to day concists of a mixture of cement, ballast and water and often some additives for changing of the consistence and so on. The ballast is constituted by sand, gravel and stone and the density of the stabilized concrete normally is about 2300 kg/m³. The strength requirements can vary. The test method for the compression strength has been standardized and is carried out in the way that a cube is moulded with a side of 150 mm with certain requirements of side-parallelism and angel-accuracy. After hardening of the cube at a room temperature of 20°C a varying number of days, in most cases 8 and 28 days, the cube will be tested by pressing between flat surfaces and the highest load is registrated before the cube starts cracking. A value of the compression strength around 60 MPa can be achieved under certain circumstances, but maximum values of about 40 MPa are most common.

For structures with lower requirements the concrete price can be cheapened particularly by increasing the rate of weight between participating water and cement in the concrete mass, the so called water cement factor. This is used to be indicated vct.

More and more demands have been raised for the density to be varied among others to get light structures, and not only by increasing the volume of the structures. The whole range of densities, from the present of about 2400 kg/m³ at conventional ballast material, and lower is interesting, and as very interesting a density of 1600 kg/m³ seems to be at present. However compression strength of at least 12 MPa will be achieved at this density with god reproducing.

This lowering of the density has proved to be difficult to obtain even without setting requirements of compression strength of at least 12 MPa with acceptable reproducing. This will preferably be valid in the density range of 2000-800 kg/m³.

Blowing air into the liquid concrete mass to get air porousities in the concrete occurs, making the concrete less affected by frost, among others in bridges and outdoor-balconies. Injection of air also is made to lower the density. However the compression strength will be dramatically lowered and the porousities are so irregularly spread that already at a density of 2000 kg/m³ the method is debatable.

Also mixing with lighter ballast to lower the density is tested, but in this case no better results will be reached before a practical limit for the compression strength will be reached.

However it has been proved that a concrete with closed porousties, so called porous concrete with densities below 500 kg/m³, can be achieved by adding a foaming agent, of trademarks present on the market, to water and after that adding a certain amount of cement. This porous concrete must be produced at the moulding place. Certainly it becomes low coefficients of thermal conductivity, which sometimes can be an advantage, but the value for compression strength hardly ever exceeds 1,5 MPa. In order to raise the density of the porous concrete more than 500 kg/m³ a certain amount of ballast has been added, but this will settle already at 700 kg/m³ and an unacceptable quality of the concrete will be obtained.

The range of densities between 800 and 2000 kg/m³ thus have been difficult to achieve industrially. Cement mixers intended for parts of this range certainly are present on the market, but they have shown many draw-backs. The producing of the concrete mass is made in connection with the moulding place. Usually a mixture of cement, water and ballast first is produced in the machine. Separately water and foaming agent are mixed up. After that this foam mixture are brought into an outlet pipe from the mixer. These two mixtures are jumbled carefully and as soon as possible brought to the moulds. The method is complicated and an interruption, unforeseen or not, will make considerable extra job. Practically it also has shown that it hardly will be possible to reach a compression strength of 12 MPa and certainly not with an acceptable repeatability at e.g. a density of 1600 kg/m$^3$, that density which to day is very coveted. This among others depending on that the water cement ratio (vct) is raised at adding of the mixture of water and foaming agent. Compensation of this by a low vct-factor in the first produced cement mixture does not work why this will be so viscous that the process is not possible to carry out.

Surprisingly it has proved to be that a concrete with very good strength caracteristics also in the range 800-2000 kg/m$^3$ can be produced by adding a porousity agent made of water, cement and a foaming agent, to e.g. a conventionally produced liquid concrete mass, mixed up by cement, ballast and water, e.g. in a stationary concrete station, and have these to mix well together. After moulding and hardening a concrete will be obtained including small porousities and variable density depending of the mixing conditions. High values of compression strength also are obtained, probably depending on that the pores formed in the concrete are very small, mainly below 3 mm, and very equally distributed, and that the water cement ratio (vct) can be kept low as well in the concrete mass as in the porousity agent. The repeatability also has proved to be very high when standardizing the routines at the producing. The concrete mass necessary for the moulding can be calculated and produced complete on the concrete station if desirable, if the distance to the moulding place is not to large. Otherwise the standard concrete mass produced at the concrete station can be transported to the working place, mixed together with the porousity agent and moulded. Mixing together the standard concrete mass and the porousity agent is a simple operation. Tests show that the mixing of the porousity agent shall be made quickly. The producing of the porousity agent is carried out separately, as mentioned above, in a simple, eventually transportable, mixer.

The invention will be closer described in the enclosed claim and in the example below, where different concretes are produced with different density and different routines. Data and results from the tests have been declarated in the table enclosed. Compression strength has been determined according to the Swedish standard SS 13 11 11 - 13 where cubes of 150 x 150 mm have been moulded and tested at a concrete station accepted by the Swedish authorities. Compression according to SS 13 11 12, 5.1 and 5.2 has been excluded in order not to disturb the distribution of the pores in the material. Also storing in water according to 5.6 in the same standard has been excluded by the same reasons. Determination of density has been made on the same place according to SS 13 72 34.

EXAMPLE 1. Specimen no 1-2.

A normal concrete mass was produced in a laboratory scale in a simple mixer, aiming for a density of about 2200 kg/m$^3$ and a compression strength after 28 days hardening of about 40 MPa. The concrete mass was produced with vct = 0,45. Besides a smaller amount of porousity agent was produced. This was also made in a smaller mixer and was made in that way that water and a foaming agent of the trademark CELLEX was mixed with a smaller amount of chemicals for stabilization of the foam. After that cement powder was added during stirring so that vct = 48 was obtained. To 6 litre of the concrete mass 0,6 litre porousity agent was added during stirring. Test cubes was moulded from the concrete mass as well as from the latter mixture with the porousity agent jumbled. The cubes where tested at an accepted concrete station as well concerning the compression strength as density (after 8 and 28 days). The result showed that, within this coveted range of density, a concrete with a good compression strength was obtained already after 8 days hardening, which was further improved after 28 days hardening. The surfaces of fracture showed that small pours, none over 3 mm extension could be seen, were equally distributed over the surface of fracture.

EXAMPLE 2. Specimen no 3-4.

The purpose was also here to get a concrete with a density of 1600 kg/m$^3$. The base concrete mass however was produced in a conventional concrete mixer often used on the working places in order to produce smaller amounts of concrete mass. The porousity agent was added directly into the mixer during the rotation of the mixing container. At specimen 3 a delay in time more than 1 minute was made for the adding while at specimen 4 the porousity agent was added without delay. The same good result as in example 1 was obtained for specimen 4, i.e. when the porousity agent was mixed in quickly, but some inferior result was obtained for specimen 3 with a delayed mixing.

EXAMPLE 3. Specimen no 5-9.

A series of test were carried out mainly on the same way as specimen 4 above, but in that case the

3

mixing rates between the start concrete mass and the porousity agent was varied. As can be seen from the result a finished concrete was obtained in the hard-mastered range of density between 2000 and 800 kg/m³ with very god values of compression strength which however naturally was lowered with lowering values of density.

TABLE

| Spec no | Porousity agent vct | Porousity agent Volume litre | Porousity agent vct | Concrete mixture Density kg/m³ 28 | Concrete mixture Density kg/m³ 8 | Concrete mixture Compression strenght MPa 28 | Concrete mixture Compression strenght MPa 8 | Results Volume litre | Results Density kg/m³ 28 | Results Density kg/m³ 8 | Results Compression strenght MPa 28 | Results Compression strenght MPa 8 |
|---|---|---|---|---|---|---|---|---|---|---|---|---|
| 1 | 0,48 | 0,6 | 0,45 | | 2200 | 400 | | 6 | 1640 | 1690 | 16,0 | 13,0 |
| 2 | " | " | " | | 2050 | 340 | 240 | " | 1644 | 1750 | 14,1 | 11,8 |
| 3 | " | 3,5 | " | | 2150 | | 240 | 12 | | 1600 | 11,6 | 8,4 |
| 4 | " | 2,6 | " | | 2150 | | 240 | 9,6 | | 1610 | 18,1 | 11,6 |
| 5 | " | 0,8 | " | | 2150 | | 240 | 12 | | 1840 | 18,9 | 14,1 |
| 6 | " | 20 | " | | 2150 | | 240 | 20 | | 1380 | 6,2 | 5,1 |
| 7 | " | 30 | " | | 2000 | | 200 | 40 | | 1340 | 5,0 | 4,2 |
| 8 | " | 40 | " | | 2000 | | 200 | 40 | | 1230 | 4,1 | 3,7 |
| 9 | " | 60 | " | | 2000 | | 200 | 40 | | 1000 | 3,5 | 3,0 |

**Claims**

1. A method for producing a concrete with variable density, which at the density 1200 kg/m$^3$ has a compression strength of at least 3,5 MPa and after that a linear increasing to at least 19 MPa at 2000 kg/m$^3$, **characterized** in mixing a concrete mass mainly consisting of cement, water and ballast and a porousity agent mainly consisting of cement, water and a foaming agent, and that the mixed mass after that is moulded in a conventional manner.

**Patentansprüche**

1. Verfahren zur Herstellung von Beton unterschiedlicher Dichte, der bei der Dichte von 1200 kg/m3 eine Kompressionsstärke von Wenigstens 3,5 MPa besitzt und danach ein linearen Ansteigen bis Wenigstens 19 MPa bei 2000 kg/m3, dadurch charkterisiert, daß eine Betonmasse, die hauptsächlich besteht aus Zement, Wasser, und Ballaststoffen und einem hohlraumbildenden Mittel, das hauptsächlich aus, Zement, Wasser und einem Schaummittel besteht, gemischt wird und daß die gemischte Masse danach in einer konventionellen Art und Weise gegossen wird.

**Revendications**

1. Un procédé pour la production d'un béton à masse volumique variable qui, pour la densité de 1 200 kg/m$^3$, a une résistance à la compression d'au moins 3,5 MPa, avec ensuite un accroissement linéaire jusqu'à au moins 19 MPa pour 2 000 kg/m$^3$, caractérisé par le mélange d'une masse de béton, constituée principalement de ciment, d'eau et de granulats, et d'un agent de porosité constitué principalement de ciment, d'eau et d'un agent moussant, et en ce que la masse mélangée est ensuite moulée de façon classique.